# EUROPEAN PATENT APPLICATION

(11) **EP 4 769 287 A1**
(43) Date of publication of application: **01.07.2026**
(21) Application number: 25866516.5
(22) Date of filing: 04.09.2025
(51) Int. Cl.: G06Q 50/06, G01W 1/10, H02J 3/00, G06N 20/20, G06F 17/17

(54) **ENERGY ANALYSIS DEVICE AND ENERGY ANALYSIS METHOD**

(30) Priority: 13.09.2024 KR 20240125948
(71) Applicant: LG ENERGY SOLUTION, LTD., Seoul 07335 (KR)
(72) Inventor: PARK, Chang Kyun, Daejeon 34122 (KR); KIM, Hyun Tae, Daejeon 34122 (KR); YUN, Seong Han, Daejeon 34122 (KR); CHOI, Yong Jin, Daejeon 34122 (KR); LEE, Sung Il, Daejeon 34122 (KR); JIN, A Rim, Daejeon 34122 (KR); SHIN, Chang Ho, Daejeon 34122 (KR)
(74) Representative: BCKIP Part mbB
(86) International application number: PCT/KR2025/013686
(87) International publication number: WO 2026/059220

(57) **Abstract**

According to some embodiments, an energy analysis device includes a processor and a memory configured to store instructions that, when executed by the processor, cause the processor to perform operations including an operation of generating meteorological interpolation data for an area of interest to which a renewable energy power plant belongs by performing data interpolation based on observed values of meteorological observation data for the area of interest, an operation of generating a power generation estimation function based on the meteorological interpolation data and past power generation data of the renewable energy power plant, and an operation of estimating an expected power generation of the renewable energy power plant based on weather forecast data for the area of interest and the power generation estimation function.

## Description

### TECHNICAL FIELD

### Cross-reference to Related Applications

This application claims priority from Korean Patent Application No. 10-2024-0125948, filed on September 13, 2024, the disclosure of which is incorporated by reference herein.

### Technical Field

Embodiments disclosed herein relate to an energy analysis device and an energy analysis method.

### BACKGROUND ART

Most methodologies for predicting renewable energy generation are based on power curves, which are constructed based on a correlation between meteorological environmental variables such as solar radiance, temperature, and wind speed and the power generation. The power curve defined through a simulation or computer modeling may be based on meteorological variables in a limited environment and may be regarded as a simple and useful tool for predicting power generation. However, actual meteorological variables are not limited to the environments defined in laboratories or modeling, but may interact with each other and exhibit nonlinear changes. Therefore, the actual power curve may differ significantly from an ideal power curve calculated through experiments or modeling.

For example, depending on topographical characteristics of the location of a renewable energy power plant, exceptional meteorological phenomena and changes such as fog, sea fog, turbulence, and the like that are not implemented in existing experiments and modeling may occur, which may lead to a decrease in the reliability of power generation predictions. In addition to environmental characteristics, weather forecasts currently provided as single scenarios by domestic and international meteorological agencies also contain high levels of uncertainty.

### DISCLOSURE OF THE INVENTION

### TECHNICAL PROBLEM

One of objectives of the embodiments disclosed herein is to provide an energy analysis device and an energy analysis method capable of overcoming the limitations of a power curve defined through a simulation experiment or computer modeling and the limitations of a weather forecast provided as a single scenario.

The technical objectives of the embodiments disclosed herein are not limited to those mentioned above, and other technical objectives not mentioned will be clearly understood by those skilled in the art from the following descriptions.

### TECHNICAL SOLUTION

According to some embodiments, an energy analysis device includes a processor and a memory configured to store instructions that, when executed by the processor, cause the processor to perform operations including an operation of generating meteorological interpolation data for an area of interest to which a renewable energy power plant belongs by performing data interpolation based on observed values of meteorological observation data for the area of interest, an operation of generating a power generation estimation function based on the meteorological interpolation data and past power generation data of the renewable energy power plant, and an operation of estimating an expected power generation of the renewable energy power plant based on weather forecast data for the area of interest and the power generation estimation function.

According to some embodiments, the operation of generating meteorological interpolation data may include an operation of generating the meteorological interpolation data by performing data assimilation based on a Kriging interpolation technique on the meteorological observation data.

According to some embodiments, the weather forecast data may include global forecast data and local forecast data, and the operation of estimating an expected power generation may include an operation of estimating the expected power generation based on the global forecast data, the local forecast data, and the power generation estimation function.

According to some embodiments, the operation of estimating an expected power generation may include an operation of generating ensemble forecast data based on the global forecast data and the local forecast data and an operation of estimating the expected power generation based on the ensemble forecast data and the power generation estimation function.

According to some embodiments, the operation of generating ensemble forecast data may include an operation of setting a forecast region including the area of interest among forecast regions of the global forecast data having a first resolution as an initial background environmental field and an operation of generating the local forecast data having a second resolution higher than the first resolution by applying the global forecast data to the initial background environmental field.

According to some embodiments, the local forecast data may include a plurality of pieces of second forecast data based on an artificial intelligence (AI) prediction model, and the operation of generating ensemble forecast data may include an operation of generating the ensemble forecast data by reflecting a plurality of probability densities of the plurality of pieces of second forecast data to the initial background environmental field.

According to some embodiments, the local forecast data may further include first forecast data based on a numerical analysis model, and the AI prediction model may be configured to output the plurality of pieces of second forecast data using the first forecast data as input.

According to some embodiments, the operation of estimating an expected power generation may include an operation of estimating the expected power generation in a probabilistic form based on the plurality of probability densities reflected in the ensemble forecast data.

According to some embodiments, an energy analysis method includes generating meteorological interpolation data for an area of interest to which a renewable energy power plant belongs by performing data interpolation based on observed values of meteorological observation data for the area of interest, generating a power generation estimation function based on the meteorological interpolation data and past power generation data of the renewable energy power plant, and estimating an expected power generation of the renewable energy power plant based on weather forecast data for the area of interest and the power generation estimation function.

According to some embodiments, the generating of the meteorological interpolation data may include generating the meteorological interpolation data by performing data assimilation based on a Kriging interpolation technique on the meteorological observation data.

According to some embodiments, the weather forecast data may include global forecast data and local forecast data, and the estimating of the expected power generation may include estimating the expected power generation based on the global forecast data, the local forecast data, and the power generation estimation function.

According to some embodiments, the estimating of the expected power generation may include generating ensemble forecast data based on the global forecast data and the local forecast data and estimating the expected power generation based on the ensemble forecast data and the power generation estimation function.

According to some embodiments, the generating of the ensemble forecast data may include setting a forecast region including the area of interest among forecast regions of the global forecast data having a first resolution as an initial background environmental field and generating the local forecast data having a second resolution higher than the first resolution by applying the global forecast data to the initial background environmental field.

According to some embodiments, the local forecast data may include a plurality of pieces of second forecast data based on an AI prediction model, and the generating of the ensemble forecast data may include generating the ensemble forecast data by reflecting a plurality of probability densities of the plurality of pieces of second forecast data to the initial background environmental field.

According to some embodiments, the local forecast data may further include first forecast data based on a numerical analysis model, and the AI prediction model may be configured to output the plurality of pieces of second forecast data using the first forecast data as input.

According to some embodiments, the estimating of the expected power generation may include estimating the expected power generation in a probabilistic form based on the plurality of probability densities reflected in the ensemble forecast data.

According to some embodiments, a computer program stored in a computer readable medium includes instructions that, when executed by the processor, cause the processor to perform operations including an operation of generating meteorological interpolation data for an area of interest to which a renewable energy power plant belongs by performing data interpolation based on observed values of meteorological observation data for the area of interest, an operation of generating a power generation estimation function based on the meteorological interpolation data and past power generation data of the renewable energy power plant, and an operation of estimating an expected power generation of the renewable energy power plant based on weather forecast data for the area of interest and the power generation estimation function.

According to some embodiments, the operation of generating meteorological interpolation data may include an operation of generating the meteorological interpolation data by performing data assimilation based on a Kriging interpolation technique on the meteorological observation data.

According to some embodiments, the weather forecast data may include global forecast data and local forecast data, and the operation of estimating an expected power generation may include an operation of estimating the expected power generation based on the global forecast data, the local forecast data, and the power generation estimation function.

According to some embodiments, the operation of estimating an expected power generation may include an operation of generating ensemble forecast data based on the global forecast data and the local forecast data and an operation of estimating the expected power generation based on the ensemble forecast data and the power generation estimation function.

### ADVANTAGEOUS EFFECTS

According to the embodiments disclosed herein, it is possible to provide an energy analysis device and an energy analysis method capable of overcoming the limitations of a power curve defined through a simulation experiment or computer modeling and the limitations of a weather forecast provided as a single scenario.

The technical effects according to the embodiments disclosed herein are not limited to those mentioned above, and other effects not mentioned will be clearly understood by those skilled in the art from the disclosure herein.

### BRIEF DESCRIPTION OF THE DRAWINGS

FIG. 1 illustrates a method in which an energy analysis device according to some embodiments operates.
FIG. 2 illustrates elements constituting the energy analysis device according to some embodiments.
FIG. 3 illustrates a conventional method for predicting power generation by generating a power curve and considering the power curve together with weather forecasts.
FIG. 4 illustrates a method for generating high-resolution weather forecast data using global forecast data and local forecast data according to some embodiments.
FIG. 5 illustrates a method for producing local forecast data against the background of global forecast data to generate high-resolution weather forecast data according to some embodiments.
FIG. 6 illustrates a process of converting meteorological observation data and global forecast data into high-resolution according to some embodiments.
FIG. 7 illustrates a method for estimating high-resolution meteorological observation data through data interpolation according to some embodiments.
FIG. 8 illustrates a method for predicting renewable energy generation using an ensemble method according to some embodiments.
FIG. 9 illustrates power generation prediction based on ensemble forecasting method from a probabilistic perspective according to some embodiments.
FIG. 10 illustrates steps constituting an energy analysis method according to some embodiments.

### MODE FOR CARRYING OUT THE INVENTION

Hereinafter, embodiments disclosed in herein will be described with reference to the accompanying drawings. However, this is not intended to limit the disclosure herein to the specific embodiments, and it is to be construed to include various modifications, equivalents, and/or alternatives of embodiments disclosed herein.

It should be appreciated that embodiments of the present disclosure and the terms used therein are not intended to limit the technological features set forth herein to a particular embodiment and include various changes, equivalents, or replacements in corresponding embodiments. With regard to the description of the drawings, similar or related reference numerals may be used to refer to similar or related elements. It is to be understood that a singular form of a noun corresponding to an item may include one or more of the things, unless the relevant context clearly indicates otherwise.

As used herein, each of phrases such as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. Terms such as "1st" and "2nd," "first," "second," "A. " "B," "(a)," or "(b)" may be used to simply distinguish a corresponding component from another, and do not limit the components in other aspects (e.g., importance or order) unless specifically stated otherwise.

In the present specification, it is to be understood that if an element (e.g., a first element) is referred to, with or without the term "operatively" or "communicatively," as "connected to," "coupled to," or "in contact with" another element (e.g., a second element), it means that the element may be connected to the other element directly (e.g., by wire or wirelessly) or indirectly (e.g., via a third element).

A method according to various embodiments disclosed herein may be included and provided in a computer program product. The computer program product may be traded as a product between a seller and a buyer. The computer program product may be distributed in the form of a machine-readable storage medium (e.g., a compact disc read only memory and CD-ROM), or be distributed (e.g., downloaded or uploaded) online via an application store, or between two operator devices directly. If distributed online, at least part of the computer program product may be temporarily generated or at least temporarily stored in the machine-readable storage medium, such as memory of the manufacturer's server, a server of the application store, or a relay server.

According to embodiments disclosed herein, each component (e.g., a module or a program) of the above-described components may include a single entity or multiple entities, and some of the plurality of entities may be disposed separately from other components. According to embodiments disclosed herein, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as those performed by a corresponding one of the plurality of components before the integration. According to embodiments disclosed herein, operations performed by the module, the program, or another component may be carried out sequentially, in parallel, repeatedly, or heuristically, or one or more of the operations may be executed in a different order or omitted, or one or more other operations may be added.

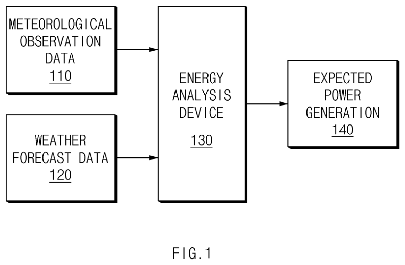

FIG. 1 illustrates a method in which an energy analysis device according to some embodiments operates.

Referring to FIG. 1, the energy analysis device 130 may calculate an expected power generation 140 of a renewable energy power plant based on meteorological observation data 110 and weather forecast data 120. The operation of the energy analysis device 130 may be implemented in the form of a computer program, a mobile application, or the like. The energy analysis device 130 may perform a process of calculating the expected power generation 140 by executing the program and/or app.

The meteorological observation data 110 may include observed values of meteorological variables such as temperature, humidity, wind speed, and the like. The renewable energy power plant may include a solar power plant, a wind power plant, or the like, and meteorological variables such as temperature, humidity, wind speed, and the like may affect the power generation of the renewable energy power plant. The meteorological observation data 110 may include observed values for predetermined observation points. Since the observation points of the meteorological observation data 110 are limited, when the location of the renewable energy power plant is far from the observation points, the expected power generation of the renewable energy power plant may not be accurately estimated.

The weather forecast data 120 may include values of meteorological variables at a future time point, and based on the values, the expected power generation 140 may be estimated. The weather forecast data 120 may include global scale data and local scale data. The local scale data may have a higher resolution than the global scale data. The weather forecast data 120 may probabilistically consider various weather scenarios of the global scale data and local scale data. Probabilistic weather scenarios of the weather forecast data 120 may form an ensemble weather forecast.

The expected power generation 140 may be calculated based on a power curve by the energy analysis device 130. The power curve may be a power generation estimation function that represents a correlation between meteorological variables and power generations. According to the embodiment, the power curve may be generated based on the meteorological observation data 110, and by applying the weather forecast data 120 to the power curve, the expected power generation 140 may be calculated. The power curve may be estimated based on values of meteorological variables at past time points according to the meteorological observation data 110 and actual power generation values of the renewable energy power plant at the same time points. For example, the power curve may be generated through data fitting, machine learning training, or the like based on the values of meteorological variables and power generation values. The power curve may best represent the correlation between past meteorological variables and power generation values, and when the weather forecast data 120 at the future time point is applied to the power curve, the expected power generation 140 at the future time point may be calculated.

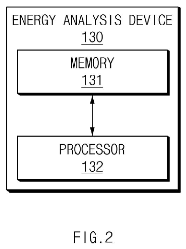

FIG. 2 illustrates elements constituting the energy analysis device according to some embodiments.

Referring to FIG. 2, the energy analysis device 130 may include a memory 131 and a processor 132. However, the energy analysis device is not limited thereto, and some components may be omitted from the energy analysis device 130, and other components may be further included in the energy analysis device 130.

The processor 132 may have a structure for executing instructions that implement operations of the energy analysis device 130. The processor 132 may be implemented as an array of a number of logic gates for processing various operations or as a general-purpose microprocessor, and may consist of a single processor or a plurality of processors. For example, the processor 132 may be implemented in the form of at least one of a microprocessor, a central processing unit (CPU), a graphics processing unit (GPU), and an application processor (AP) .

The processor 132 may operate together with the memory 131 configured to store various data, instructions, mobile applications, computer programs, and the like. The memory 131 may be configured separately from or integrally with the processor 132. The memory 131 may store instructions of a computer program and/or a mobile application, and the processor 132 may process various operations by executing instructions stored in the memory 131. For example, the memory 131 may be implemented in a form of a non-volatile device such as a read-only memory (ROM), a programmable ROM (PROM), an erasable programmable ROM (EPROM), an electrically erasable PROM (EEPROM), a flash memory, a parallel random-access memory (PRAM), a magneto-resistive RAM (MRAM), a resistive RAM (RRAM), a ferroelectric RAM (FRAM), or the like, or a volatile device such as a dynamic RAM (DRAM), a static RAM (SRAM), a synchronous dynamic RAM (SDRAM), a parallel RAM (PRAM), or the like, or may be implemented in a form of a hard disk drive (HDD), a solid state drive (SSD), a secure digital (SD), Micro-SD, or a combined form thereof.

The processor 132 may be configured to, by executing instructions stored in the memory 131, generate meteorological interpolation data for an area of interest by performing data interpolation based on observed values of meteorological observation data 110 for the area of interest to which the renewable energy power plant belongs. The observed values of the meteorological observation data 110 may be meteorological variable values at observation points where observation equipment is installed. When the installation location of the observation equipment is not close to the location of the renewable energy power plant, the observed values of the meteorological observation data 110 may differ from meteorological variables that actually affect power generation at the power plant. In order to address this, data interpolation may be performed based on the observed values of the meteorological observation data 110, and the meteorological variables that actually affect power generation at the power plant may be estimated.

The processor 132 may be configured to, by executing instructions stored in the memory 131, generate a power generation estimation function based on meteorological interpolation data and past power generation data of the renewable energy power plant. The power generation estimation function may be generated in the form of a power curve. The power generation estimation function may be generated through data fitting, machine learning training, or the like, and may express a correlation between past meteorological variables and past power generation data. Since the meteorological interpolation data may be used as past meteorological variables, the power generation estimation function may have higher performance compared to when the meteorological observation data 110 with low accuracy due to location differences is used.

The processor 132 may be configured to, by executing instructions stored in the memory 131, estimate the expected power generation of the renewable energy power plant based on the weather forecast data 120 on the area of interest and the power generation estimation function. The weather forecast data 120 may represent meteorological variables at a future time point in the area of interest. By applying this to the power generation estimation function, the expected power generation of the renewable energy power plant may be estimated. According to the embodiment, the weather forecast data 120 may be a combination of global forecast data having a high scale and low resolution and local forecast data having a low scale and high resolution.

According to the embodiment, the energy analysis device 130 may be configured to generate the meteorological interpolation data by performing data assimilation based on a Kriging interpolation technique on the meteorological observation data 110. Data assimilation is a mathematical technique for estimating optimal values at points where no observations exist, and may be used in meteorological fields to improve the accuracy of atmospheric numerical model data using atmospheric observation data. According to the data assimilation based on the Kriging interpolation technique, observed values at the location of the renewable energy power plant may be optimally estimated even when actual observed values do not exist at the location.

According to the embodiment, the weather forecast data 120 may include global forecast data and local forecast data, and the energy analysis device 130 may be configured to estimate the expected power generation based on the global forecast data, the local forecast data, and the power generation estimation function. The global forecast data may show trends of weather phenomena on a global scale, but the spacing of data grids may be wide and the accuracy of forecasts for the location of the renewable energy power plant may be low. The local forecast data specific to a specific region may be additionally considered. By combining the global forecast data and the local forecast data, various weather scenarios may be handled, and in this case, the expected power generation 140 may be calculated in the form of a probabilistic distribution based on probability values of the scenarios.

According to the embodiment, the energy analysis device 130 may be configured to generate ensemble forecast data based on the global forecast data and the local forecast data, and estimate expected power generation based on the ensemble forecast data and the power generation estimation function. The ensemble forecast data may be forecast data obtained by harmonizing rough data of the global forecast data and detailed data of the local forecast data. The ensemble forecast data may represent a probability distribution of various weather scenarios from a probabilistic perspective.

According to the embodiment, the energy analysis device 130 may be configured to set a forecast region including the area of interest among forecast regions of the global forecast data having a first resolution as an initial background environmental field, and to generate the local forecast data having a second resolution higher than the first resolution by applying the global forecast data to the initial background environmental field. Since the global forecast data has a low resolution, the actual weather of the renewable energy power plant may not be accurately predicted. The initial background environmental field may provide initial background data for generating the local forecast data, and modifications or optimizations to the initial background environmental field may be performed to generate more diverse ensemble forecast data.

According to the embodiment, the local forecast data may include a plurality of pieces of second forecast data based on an AI prediction model, and the energy analysis device 130 may be configured to generate the ensemble forecast data by reflecting a plurality of probability densities of the plurality of pieces of second forecast data into the initial background environmental field. The plurality of pieces of second forecast data that serve as a background for the local forecast data may correspond to various weather scenarios. The weather scenarios may be generated based on the AI prediction model. Each weather scenario may be expressed as a probability of a specific weather phenomenon occurring. The ensemble forecast data may be generated when the probability densities of various weather scenarios are reflected in the initial background environmental field of the global forecast data. For example, the AI prediction model may include an artificial intelligence neural network model or the like, which is trained through various machine learning techniques. Training of the AI prediction model may be performed based on high-accuracy past observation information accumulated over a long period of time through ground-based observatories, radars, and satellites.

According to the embodiment, the local forecast data may further include first forecast data based on a numerical analysis model, and the AI prediction model may be configured to output the plurality of pieces of second forecast data using the first forecast data as input. The numerical analysis model may have higher computational load and complexity than the AI prediction model. In order to improve the forecast accuracy of the plurality of pieces of second forecast data based on the AI prediction model, the first forecast data based on the numerical analysis model may be used as input values to the AI prediction model.

According to the embodiment, the energy analysis device 130 may be configured to estimate the expected power generation in a probabilistic form based on a plurality of probability densities reflected in the ensemble forecast data. The ensemble forecast data may represent probability density values for a plurality of weather scenarios to be realized, and the expected power generation may also be calculated in a probabilistic form. For example, the expected power generation in the probabilistic form may be a probability distribution that has a close relation with the probability values of various weather scenarios being realized.

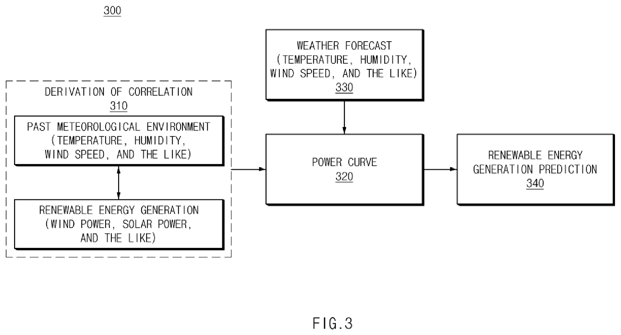

FIG. 3 illustrates a conventional method for predicting power generation by generating a power curve and considering the power curve together with weather forecasts.

Referring to FIG. 3, a related art 300 for predicting power generation by generating a power curve and considering the power curve together with a weather forecast may be illustrated. In the related art 300, derivation 310 of a correlation between past meteorological environments and renewable energy generation may be performed, and a power curve 320 may be generated therefrom. When a weather forecast 330 is applied to the power curve 320, a renewable energy generation prediction 340 may be performed.

In the case of the related art 300, the weather forecast 330 may use the global forecast data as it is, and in this case, due to the low resolution of the global forecast data, a discrepancy may occur between the forecast data and the location of the power plant, and the accuracy of power generation prediction may be degraded. In addition, since the weather forecast 330 provides a single scenario in a deterministic form, uncertainty may exist in power generation prediction. In addition, in the derivation 310 of the correlation, since the past meteorological environment represents only predetermined observation points, when the location of the power plant is far from the observation points, the accuracy of power generation prediction may be degraded.

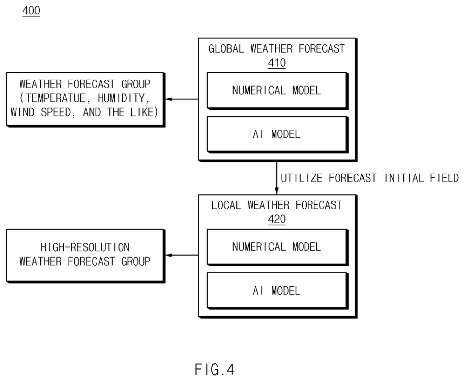

FIG. 4 illustrates a method for generating high-resolution weather forecast data using global forecast data and local forecast data according to some embodiments.

Referring to FIG. 4, an improved technique 400 may be illustrated that exemplifies the method for generating high-resolution weather forecast data using global forecast data and local forecast data. In the improved technique 400, a global weather forecast 410 may generate a weather forecast group based on a numerical model and an AI model, and may be used as an initial field for a local weather forecast 420. The local weather forecast 420 may generate a high-resolution weather forecast group using a grid area to which the power plant belongs in low-resolution data of the global weather forecast 410 as a forecast initial field. The local weather forecast 420 may operate based on the numerical model and the AI model, and may generate forecast groups based on various weather scenarios.

Most of the forecast data provided by existing domestic and international meteorological agencies, such as the Korea Meteorological Administration (KMA), the European Centre for Medium-Range Weather Forecasts (ECMWF), or the like are based on global numerical models or global AI weather models. The Korea Meteorological Administration provides some weather forecast data based on local numerical models, such as a local data assimilation and prediction system (LDAPS) or the like, but provides only a single scenario. Forecast data calculated from models based on a global scale has a spatial grid resolution of 10 km or more in latitude intervals or 10 km or more in longitude intervals, which corresponds to a relatively low resolution compared to a spatial scale of tens of meters of a renewable energy power plant. In addition, since forecast data of the global model, like the Korea Meteorological Administration's LDAPS, generally provides only a single forecast scenario, additional forecast scenarios may be required to secure reliability.

Accordingly, as illustrated in FIG. 4, a large amount of weather forecast data may be generated independently by utilizing a regional numerical model and a regional AI weather model. Since the regional numerical model and the reginal AI model simulate atmospheric movements in a limited region rather than across the globe, they may produce forecast data that reflects changes in local meteorological phenomena not captured in global models.

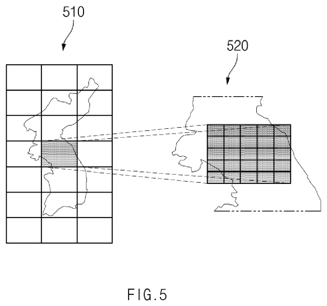

FIG. 5 illustrates a method for applying local forecast data to global forecast data to generate high-resolution weather forecast data according to some embodiments.

Referring to FIG. 5, a method for producing local forecast data 520 against the background of global forecast data 510 to generate high-resolution weather forecast data may be illustrated. Among low-resolution grid areas of the global forecast data 510, an area where the power plant is located may serve as an initial background environmental field, and high-resolution weather forecast data may be generated through the production of the local forecast data 520 for the initial background environmental field. A local numerical model and a local AI model may generate high-resolution data utilizing the initial background environmental field.

As the local numerical model, a weather research and forecasting (WRF) model may be utilized. However, the WRF model is based on traditional numerical simulation techniques that sequentially compute complex dynamic and physical equations, and processing higher-resolution data may require a greater amount of computing power and cost. In contrast, the AI weather model may produce forecast data with higher accuracy while requiring less cost and infrastructure than the numerical model. Since the AI weather model takes only several to several tens of minutes to generate one single forecast scenario, a large number of scenarios may be generated compared to the numerical model, and an ensemble may be performed for the generated scenarios. The AI weather model may be trained based on high-accuracy past observation information accumulated over a long period of time through ground-based observatories, radars, and satellites to better represent meteorological phenomena in a specific region. In order to improve forecast accuracy, forecast data calculated from the local numerical model may be used as input values to local AI weather model.

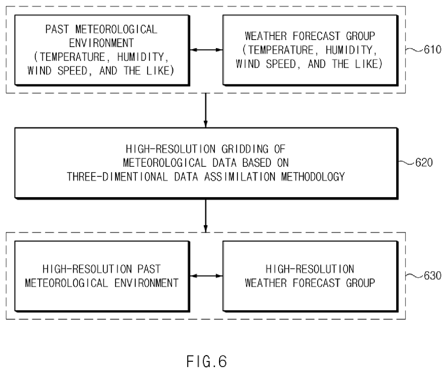

FIG. 6 illustrates a process of converting meteorological observation data and low-resolution global forecast data into high-resolution according to some embodiments.

Referring to FIG. 6, a flow 600 illustrating the process of converting meteorological observation data and low-resolution global forecast data into high-resolution may be illustrated. In the flow 600, existing data 610 may include an existing past meteorological environment and an existing weather forecast group, and resolution enhancement 620 may be performed based on the existing data 610. The resolution enhancement 620 may include data interpolation or the like based on data assimilation methodology. Improved data 630 may be generated by the resolution enhancement 620. The improved data 630 may include a high-resolution past meteorological environment and a high-resolution weather forecast group.

Except for satellites moving outside the atmosphere, meteorological phenomena are observed relatively locally by ground-based observatories, radars, lidars, and the like. Accordingly, there may be many regions where meteorological phenomena are not directly observed, and renewable energy power plants are highly likely to be located in these observation shadow regions. In these observation shadow regions, since there are no accumulated observed values for past meteorological environments, it may be necessary to estimate data in the shadow regions based on data observed in nearby regions.

Similarly, forecast data generated by domestic and international meteorological agencies using global numerical models and global AI weather models may be data of regions located far from the locations of renewable energy power plants due to their large grid spacing. Therefore, in order to construct a power curve by analyzing a correlation with power generation based on more accurate meteorological information, it may be necessary to convert the weather data into high resolution. Using the same procedure as illustrated in FIG. 6, past meteorological observation data and weather forecast data located far from the power plant may be converted into high-resolution data with grid units of several kilometers to several hundred meters using a three-dimensional data assimilation methodology. Kriging may be used as a method for data assimilation.

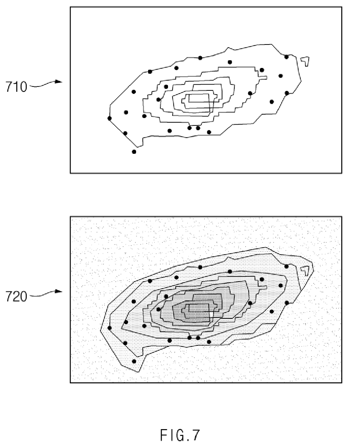

FIG. 7 illustrates a method for estimating high-resolution meteorological observation data through data interpolation according to some embodiments.

Referring to FIG. 7, point data 710 may be converted into high-resolution grid data 720 by the method for estimating high-resolution meteorological observation data through data interpolation.

In Kriging-based data assimilation, statistical weights may be calculated by integrating three-dimensional spatial information for observation data located near a location where data generation is required, and required values may be estimated by applying the calculated weights. For example, by performing Kriging-based data assimilation reflecting terrain information on temperature values recorded at observatories of the point data 710, the high-resolution grid data 720 having a grid resolution of 500-meter units may be generated. The high-resolution grid data 720 may better represent a tendency in which temperature decreases with increasing altitude. By the data assimilation methodology, a more accurate power curve may be constructed even for a power plant located in an area where data does not exist.

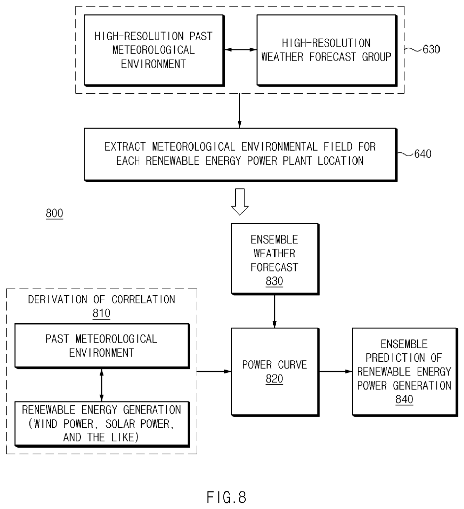

FIG. 8 illustrates a method for predicting renewable energy generation using an ensemble method according to some embodiments.

Referring to FIG. 8, a flow 800 regarding a method for predicting renewable energy generation in an ensemble manner may be illustrated. Improved data 630 of the flow 800 may be the same as the improved data 630 of FIG. 6. When the improved data 630 is generated, meteorological environmental field extraction 640 may be performed based on the improved data.

Derivation 810 of the correlation of FIG. 8 may be compared with the derivation 310 of the correlation of the related art 300 of FIG. 3. In the derivation 810 of the correlation, the correlation between the past meteorological environment converted into high resolution and the power generation may be derived, and a power curve 820 may be generated based on the correlation. When an ensemble weather forecast 830 converted into high resolution is applied to the power curve 820, ensemble prediction 840 of renewable energy power generation may be performed.

When meteorological observation data is converted into high resolution, more appropriate information for the location of a power plant may be provided based on the converted meteorological observation data. When the meteorological observation data is provided as high-resolution grid values, geographic weights may be applied to the grid values based on the location of the power plant, and meteorological variables at the location of the power plant may be estimated. Based on the estimated meteorological variables, the power curve allowing more accurate power generation prediction may be constructed.

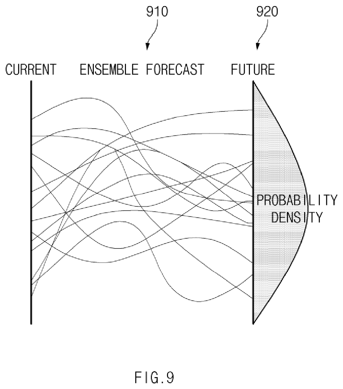

FIG. 9 illustrates power generation prediction based on an ensemble forecasting method from a probabilistic perspective according to some embodiments.

Referring to FIG. 9, an ensemble forecast 920 generated based on a plurality of forecast scenarios 910 provided by a local AI forecast model may be illustrated. The plurality of forecast scenarios 910 may provide weather forecasts from the probabilistic perspective, and the ensemble forecast 920 may be generated in the form of a probability distribution.

Power generation may be predicted from the probabilistic perspective when a multi-scenario forecast model provided by combining global forecast data and local forecast data is utilized, as compared with a case where existing single-scenario-based forecast data is used. When applying ensemble forecasting from the probabilistic perspective to a power curve, ensemble power prediction may be performed, which may improve the reliability of power generation prediction based on a probability density function.

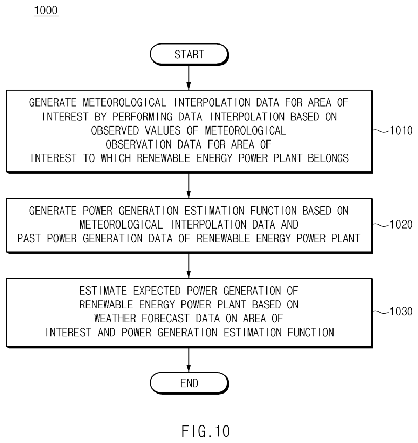

FIG. 10 illustrates steps constituting an energy analysis method according to some embodiments.

Referring to FIG. 10, an energy analysis method 1000 may include steps 1010 to 1030. However, the welding management method is not limited thereto, and some steps may be omitted or other general steps may be added, and the steps of the energy analysis method 1000 may be executed in a different order than the illustrated order.

The energy analysis method 1000 may include steps to be processed in a time series manner in the energy analysis device 130. Therefore, even when the content is omitted below, the content described above for the energy analysis device 130 may be equally applied to the energy analysis method 1000.

Steps 1010 to 1030 of the energy analysis method 1000 may be performed by the memory 131 and processor 132 of the energy analysis device 130.

In step 1010, the energy analysis device 130 may perform a step of generating meteorological interpolation data for an area of interest by performing data interpolation based on observed values of meteorological observation data for the area of interest to which the renewable energy power plant belongs.

In step 1020, the energy analysis device 130 may perform a step of generating a power generation estimation function based on meteorological interpolation data and past power generation data of a renewable energy power plant.

In step 1030, the energy analysis device 130 may perform a step of estimating expected power generation of the renewable energy power plant based on weather forecast data on the area of interest and the power generation estimation function.

According to an embodiment, the energy analysis method 1000 may be implemented in the form of a computer program stored in a computer-readable storage medium. That is, the computer program may include instructions for implementing the energy analysis method 1000, and the instructions of the program may be stored in the computer-readable storage medium. The computer program may include a mobile application.

In an embodiment, a computer-readable storage medium may include magnetic media such as hard disks, floppy disks, and magnetic tapes, optical media such as CD-ROMs and DVDs, magneto-optical media such as floptical disks, and a hardware device specially configured to store and execute computer program instructions, such as ROM, RAM, flash memory, or the like. Computer program instructions may include machine language code generated by a compiler and high-level language code that may be executed by a computer using an interpreter, or the like.

Terms such as "include," "comprise," or "have" described above mean that the corresponding component may be present unless otherwise stated, and thus it should be construed that other components may be further included rather than excluding other components. All terms including technical or scientific terms have the same meaning as commonly understood by those of ordinary skill in the art to which embodiments disclosed herein belong, unless otherwise defined. Terms commonly used such as those defined in dictionaries should be interpreted as having a meaning that is consistent with their meaning in the context of the related art and will not be interpreted in an idealized or overly formal sense unless expressly so defined herein.

The above description is merely an example of the technical idea disclosed herein, and those with ordinary skill in the art to which the embodiments disclosed herein belong may make various modifications and variations without departing from the essential characteristics of the embodiments disclosed herein. Accordingly, the embodiments disclosed herein are not intended to limit the technical ideas of the embodiments disclosed herein but rather to explain them, and the scope of the technical ideas disclosed herein is not limited by these embodiments. The scope of protection disclosed herein should be interpreted by the accompanying claims, and all technical ideas within the scope equivalent thereto should be construed as being included in the scope of rights herein.

## Claims

1. An energy analysis device comprising:
a processor; and
a memory configured to store instructions that, when executed by the processor, cause the processor to perform operations including:
an operation of generating meteorological interpolation data for an area of interest to which a renewable energy power plant belongs by performing data interpolation based on observed values of meteorological observation data for the area of interest;
an operation of generating a power generation estimation function based on the meteorological interpolation data and past power generation data of the renewable energy power plant; and
an operation of estimating an expected power generation of the renewable energy power plant based on weather forecast data for the area of interest and the power generation estimation function.

2. The energy analysis device of claim 1, wherein the operation of generating meteorological interpolation data includes an operation of generating the meteorological interpolation data by performing data assimilation based on a Kriging interpolation technique on the meteorological observation data.

3. The energy analysis device of claim 1, wherein the weather forecast data includes global forecast data and local forecast data, and
the operation of estimating an expected power generation includes an operation of estimating the expected power generation based on the global forecast data, the local forecast data, and the power generation estimation function.

4. The energy analysis device of claim 3, wherein the operation of estimating an expected power generation includes:
an operation of generating ensemble forecast data based on the global forecast data and the local forecast data; and
an operation of estimating the expected power generation based on the ensemble forecast data and the power generation estimation function.

5. The energy analysis device of claim 4, wherein the operation of generating ensemble forecast data includes:
an operation of setting a forecast region including the area of interest among forecast regions of the global forecast data having a first resolution as an initial background environmental field; and
an operation of generating the local forecast data having a second resolution higher than the first resolution by applying the global forecast data to the initial background environmental field.

6. The energy analysis device of claim 5, wherein the local forecast data includes a plurality of pieces of second forecast data based on an artificial intelligence (AI) prediction model, and
the operation of generating ensemble forecast data includes an operation of generating the ensemble forecast data by reflecting a plurality of probability densities of the plurality of pieces of second forecast data to the initial background environmental field.

7. The energy analysis device of claim 6, wherein the local forecast data further includes first forecast data based on a numerical analysis model, and
the AI prediction model is configured to output the plurality of pieces of second forecast data using the first forecast data as input.

8. The energy analysis device of claim 6, wherein the operation of estimating an expected power generation includes an operation of estimating the expected power generation in a probabilistic form based on the plurality of probability densities reflected in the ensemble forecast data.

9. An energy analysis method comprising:
generating meteorological interpolation data for an area of interest to which a renewable energy power plant belongs by performing data interpolation based on observed values of meteorological observation data for the area of interest;
generating a power generation estimation function based on the meteorological interpolation data and past power generation data of the renewable energy power plant; and
estimating an expected power generation of the renewable energy power plant based on weather forecast data for the area of interest and the power generation estimation function.

10. The energy analysis method of claim 9, wherein the generating of the meteorological interpolation data includes generating the meteorological interpolation data by performing data assimilation based on a Kriging interpolation technique on the meteorological observation data.

11. The energy analysis method of claim 9, wherein the weather forecast data includes global forecast data and local forecast data, and
the estimating of the expected power generation includes estimating the expected power generation based on the global forecast data, the local forecast data, and the power generation estimation function.

12. The energy analysis method of claim 11, wherein the estimating of the expected power generation includes:
generating ensemble forecast data based on the global forecast data and the local forecast data; and
estimating the expected power generation based on the ensemble forecast data and the power generation estimation function.

13. The energy analysis method of claim 12, wherein the generating of the ensemble forecast data includes:
setting a forecast region including the area of interest among forecast regions of the global forecast data having a first resolution as an initial background environmental field; and
generating the local forecast data having a second resolution higher than the first resolution by applying the global forecast data to the initial background environmental field.

14. The energy analysis method of claim 13, wherein the local forecast data includes a plurality of pieces of second forecast data based on an AI prediction model, and
the generating of the ensemble forecast data includes generating the ensemble forecast data by reflecting a plurality of probability densities of the plurality of pieces of second forecast data to the initial background environmental field.

15. The energy analysis method of claim 14, wherein the local forecast data further includes first forecast data based on a numerical analysis model, and
the AI prediction model is configured to output the plurality of pieces of second forecast data using the first forecast data as input.

16. The energy analysis method of claim 14, wherein the estimating of the expected power generation includes estimating the expected power generation in a probabilistic form based on the plurality of probability densities reflected in the ensemble forecast data.

17. A computer program stored in a computer readable medium that includes instructions that, when executed by the processor, cause the processor to perform operations comprising:
an operation of generating meteorological interpolation data for an area of interest to which a renewable energy power plant belongs by performing data interpolation based on observed values of meteorological observation data for the area of interest;
an operation of generating a power generation estimation function based on the meteorological interpolation data and past power generation data of the renewable energy power plant; and
an operation of estimating an expected power generation of the renewable energy power plant based on weather forecast data for the area of interest and the power generation estimation function.

18. The computer program of claim 17, wherein the operation of generating meteorological interpolation data includes an operation of generating the meteorological interpolation data by performing data assimilation based on a Kriging interpolation technique on the meteorological observation data.

19. The computer program of claim 17, wherein the weather forecast data includes global forecast data and local forecast data, and
the operation of estimating an expected power generation includes an operation of estimating the expected power generation based on the global forecast data, the local forecast data, and the power generation estimation function.

20. The computer program of claim 19, wherein the operation of estimating an expected power generation includes:
an operation of generating ensemble forecast data based on the global forecast data and the local forecast data; and
an operation of estimating the expected power generation based on the ensemble forecast data and the power generation estimation function.
